# EUROPÄISCHE PATENTSCHRIFT

(11) **EP 0 833 534 B1**
(45) Veröffentlichungstag und Bekanntmachung des Hinweises auf die Patenterteilung: **27.10.2004**
(21) Anmeldenummer: 97113862.3
(22) Anmeldetag: 11.08.1997
(51) Int. Cl.: H04Q 7/24, H04Q 7/30

(54) **Schnurloskommunikationsanlage gemäss dem ETSI-Standard DECT**
Communications system according to the ETSI-standard DECT
Système de communication selon le standard DECT d'ETSI

(30) Priorität: 30.09.1996 DE 19640220
(43) Veröffentlichungstag der Anmeldung: 01.04.1998
(73) Patentinhaber: SIEMENS AKTIENGESELLSCHAFT, 80333 München (DE)
(72) Erfinder: Korpi, Markku, Dipl.-Ing., 82319 Starnberg (DE); Langmantel, Ernst, Dipl.-Ing., 1210 Wien (AT); Müller, Wilhelm, Dipl.-Ing., 85457 Wörth (DE)

(56) Entgegenhaltungen:
- "RADIO EQUIPMENT AND SYSTEMS (RES); DIGITAL EUROPEAN CORDLESS TELECOMMUNICATIONS (DECT) SYSTEM DESCRIPTION DOCUMENT, ETSI" ETSI TECHNICAL REPORT, ETR 056, - Juli 1993 (1993-07) Seiten 1-235, XP002123796 SOPHIA ANTIPOLIS, FRANCE

## Beschreibung

Die Erfindung betrifft eine Schnurloskommunikationsanlage entsprechend dem Oberbegriff des Anspruchs 1.

Eine dem Oberbegriff des Anspruchs 1 entsprechende Schnurloskommunikationsanlage ist in "Radio Equipment and Systems (RES); Digital European Cordless Telecommunications (DECT) System Description Document", ETSI Technical Report, ETR 056, Juli 1993, Seite 1-235, XP002123796 beschrieben. Eine derartige Schnurloskommunikationsanlage umfaßt eine Vermittlungseinrichtung mit Vermittlungssteuerung zum Auf- und Abbau von Verbindungen zu Endgeräten, einer Vielzahl von Funkbasisstationen zum Bereitstellen der Luftschnittstelle gemäß dem ETSI-Standard DECT, mindestens einem Schnurlosendgerät gemäß dem ETSI-Standard DECT, um über die Luftschnittstelle und eine Basisstation eine Verbindung zur Vermittlungseinrichtung auf- bzw. abzubauen und einer zentralen Einrichtung, über die die Basisstationen mit der Vermittlungseinrichtung verbindbar sind. Solche Systeme sind standardisiert und die Protokolle zwischen dem DECT-Endsystem, dem Funkbereich und einem angeschlossenen ISDN-Subnetz sind geordnet nach den Schichten 1 bis 3 bzw. 4 beispielsweise dem DECT System Description Document RES-3N(90) 168, Ve 4.2.2 vom 28.6.1991 auf den Seiten 7.63 bis 7.65 zu entnehmen. In den sechs auf den genannten Seiten beispielhaft dargestellten Protokollstapeln ist jeweils vorgesehen, daß in dem Funksubsystem, also in den einzelnen Basisstationen mindestens das Schicht-1-Protokoll PHL und die beiden Schicht-2-Protokolle MAC und DLC sowie weitere Protokolle darüberliegender Schichten ausgewertet werden.

Insbesondere für die Auswertung des Schicht-1-Protokolls PHL und der Schicht-2-Protokolle MAC und DLC ist zum Bereitstellen der erforderlichen Mobilitätsfunktionen eine quasi-Echtzeit-Signalbearbeitung in hohem Umfang erforderlich. Daher benötigt jede Basisstation einen mächtigen und deshalb teuren Signalprozessor.

Aufgabe der vorliegenden Erfindung ist es, eine gattungsgemäße Schnurloskommunikationsanlage bereitzustellen, die die gemäß dem ETSI-Standard DECT geforderten Funktionen ausführen kann und trotzdem die Realisierung von Basisstationen mit weniger aufwendigen Signalprozessoren ermöglicht. Diese Aufgabe löst die Erfindung durch eine Schnurloskommunikationsanlage mit den Merkmalen des Anspruches 1.

Erfindungsgemäß enthalten die Basisstationen einer Schnurloskommunikationsanlage jeweils nur eine Protokollauswerteeinrichtung zum Auswerten eines Teiles der Schicht-2-Meldungen des DECT-Protokolls einschließlich der Funktion des Kanalwechsels bei aufgebauter Verbindung, der gemäß dem DECT-Standard mit Bearer Handover bezeichnet wird. Darüber hinaus enthält die zentrale Einrichtung eine Protokollauswerteeinrichtung zum Auswerten des anderen Teils der Schicht-2-Meldungen gemäß DECT-Protokoll einschließlich der Funktion des Umschaltens bestehender Verbindungen von einer Basisstation zu einer anderen Basisstation, die gemäß DECT-Standard Connection Handover genannt wird. Die in der zentralen Einrichtung auszuwertenden Schicht-2-Meldungen des DECT-Protokolls werden folglich von der Basisstation nicht ausgewertet, sondern lediglich zu der zentralen Einrichtung weitergeleitet. Dies erfolgt erfindungsgemäß durch Einpacken der Meldung in eine Meldung eines anderen Protokolls. Des weiteren ist die zentrale Einrichtung in Form eines peripheren Anschlußmoduls in die Vermittlungseinrichtung eingebunden.

Nachstehend wird die Erfindung anhand eines Ausführungsbeispiels unter Bezugnahme auf die Figur näher erläutert. Die Figur zeigt als Blockdarstellung die Komponenten einer erfindungsgemäßen Schnurloskommunikationsanlage und diesen Komponenten zugeordnet die Verteilung der Schichten 1, 2 und 3 eines leitungsgebunden übertragenen Protokolls und des Schnurlosprotokolls gemäß DECT-Standard.

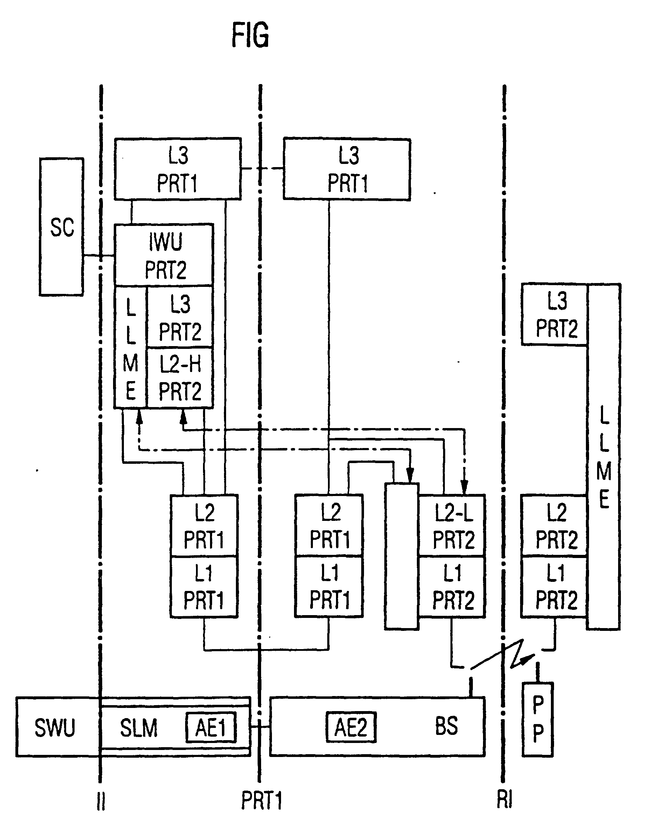

In Fig. 1 unten ist in einer Blockdarstellung einer Schnurloskommunikationsanlage eine Vermittlungseinrichtung SWU mit einer Peripheriebaugruppe SLM dargestellt, die eine zentrale Einrichtung im Sinne der vorstehend erläuterten Erfindung ist. Außerdem ist eine Basisstation BS zum Umsetzen von drahtgebunden übertragenen Signalen und drahtlos übertragenen Signalen sowie ein tragbares Kommunikationsendgerät PP dargestellt. Die Peripheriebaugruppe SLM kommuniziert mit der Vermittlungssteuerung SC der Vermittlungseinrichtung SWU über eine interne Schnittstelle II, beispielsweise mit Hilfe eines nicht in der Darstellung berücksichtigten ISDN-Protokolls. Die Kommunikation zwischen der Peripheriebaugruppe SLM und der Basisstation BS erfolgt mit Hilfe eines für drahtgebundene Übertragung vorgesehenen ersten Protokolls PRT1. Zwischen der Basisstation BS und dem Schnurlosendgerät PP findet eine Kommunikation über eine Luftschnittstelle Ri unter Verwendung eines für die Funkübertragung vorgesehenen zweiten Protokolls PRT2, nämlich dem Protokoll gemäß dem ETSI-Standard DECT, statt.

Sowohl die Peripheriebaugruppe SLM als auch die Basisstation BS hat jeweils eine Auswerteeinrichtung AE1, AE2 zur Auswertung von Meldungen des ersten und zweiten Protokolls. Oberhalb des genannten Blockschaltbildes zeigt Fig. 1 in vertikaler Zuordnung die Protokollarchitektur für die dargestellte Schnurloskommunikationsanlage. In dem gezeigten Ausführungsbeispiel einer Schnurloskommunikationsanlage ist die Schicht-2 L2PRT2 des DECT-Protokolls aufgeteilt in einen unteren, in der Basisstation BS auszuwertenden Anteil L2-L PRT2 und in einen oberen, in der Peripheriebaugruppe SLM auszuwertenden Teil L2-H PRT2. Der untere Anteil L2-L PRT2 der Schicht-2 beinhaltet hierbei u.a. die Funktion des Kanalwechsels Bearer Handover bei aufgebauter Verbindung innerhalb derselben Basisstation BS. Der obere Anteil L2-H PRT2 der Schicht-2 des DECT-Protokolls beinhaltet mindestens die Funktion des Umschaltens einer bestehenden Verbindung von einer Basisstation BS zu einer anderen Basisstation Connection Handover.

Im Endgerät PP werden die Meldungen der Schichten 1, 2 und 3 L1 PRT2, L2 PRT2 und L3 PRT2 des DECT-Protokolls PRT2 ausgewertet, die über eine Lenkungseinheit für die unteren Schichten LLME (Low Layer Management Entity) koordiniert werden.

In der durch die Vermittlungseinrichtung SWU mit ihren Peripherieanschlußgruppen SLM und durch Basisstationen BS gebildeten ortsfesten Schnurloskommunikationseinrichtung der Schnurloskommunikationsanlage wird die Schicht-1 des DECT-Protokolls L1 PRT2 und die untere Komponente der Schicht-2 des DECT-Protokolls L2-LPRT2 in der Basisstation ausgewertet. Die Schicht-3 des DECT-Protokolls L3 PRT2 sowie die höhere Komponente der Schicht-2 des DECT-Protokolls L2-H PRT2 werden in der Peripheriebaugruppe SLM ausgewertet. Sowohl in der Basisstation BS als auch in der Peripheriebaugruppe SLM werden die unteren Schichten durch eine Lenkungseinheit für die unteren Schichten LLME (Low Layer Management Entity) koordiniert.

Im gezeigten Ausführungsbeispiel liegen die Schichten 1, 2 und 3 des für die Steuerung der Basisstation und für den Aufbau der Funkstrecke zwischen Basisstation und Kommunikationsendgerät vorgesehenen ersten Protokolls PRT1 jeweils in der Basisstation BS und in der Peripheriebaugruppe SLM vor. Die Schicht-3 L3 PRT2 des DECT-Protokolls PRT2 kommuniziert über eine Umsetzeinheit IWU PRT2 (Interworking Unit) mit der Schicht-3 des ersten Protokolls L3 PRT1 sowie über eine interne Schnittstelle II mit Hilfe eines weiteren Protokolls mit der entsprechenden Schicht der zentralen Steuerung SC der Kommunikationsvermittlungseinrichtung SWU.

Die Schicht-3-Meldungen des zweiten Protokolls PRT2 können nicht unmittelbar zwischen dem Endgerät PP und der Peripheriebaugruppe SLM über die Schichten 2 und 1 des zweiten Protokolls L2 PRT2 und L1 PRT2 ausgetauscht werden, da zwischen der Peripheriebaugruppe SLM und der peripheren Einrichtung BS keine physikalische Schicht L1 PRT2 des DECT-Protokolls PRT2 vorhanden ist. Dies kann beispielsweise dadurch bedingt sein, daß zwischen der Peripheriebaugruppe SLM und der Basisstation BS keine hochfrequenten Signale übertragen werden können.

## Patentansprüche

1. Schnurloskommunikationsanlage gemäß dem ETSI-Standard DECT, bestehend aus
- einer Vermittlungseinrichtung (SWU) mit Vermittlungssteuerung (SC) zum Auf- und Abbau von Verbindungen zu Endgeräten (PP),
- einer Vielzahl von Funk-Basisstationen (BS) zum Bereitstellen der Luftschnittstelle (RI) gemäß dem ETSI-Standard DECT, wobei die Basisstationen (BS) jeweils eine Protokollauswerteeinrichtung (AE2) zum Auswerten eines die Funktion des Kanalwechsels bei aufgebauter Verbindung umfassenden Teils (L2-L PRT2) der Schicht-2-Meldungen des DECT-Protokolls (PRT2) aufweisen,
- mindestens einem Schnurlosendgerät (PP) gemäß dem ETSI-Standard DECT, um über die Luftschnittstelle (RI) und eine Basisstation (BS) eine Verbindung zur Vermittlungseinrichtung (SWU) auf- und abzubauen, und
- einer zentralen Einrichtung (SLM), über welche die Basisstationen mit der Vermittlungseinrichtung (SWU) verbindbar sind, wobei die zentrale Einrichtung (SLM) eine Protokollauswerteeinrichtung (AE1) zum Auswerten eines die Funktion des Umschaltens bestehender Verbindungen von einer Basisstation (BS) zu einer anderen Basisstation (BS) umfassenden Teils (L2-H PRT2) der Schicht-2-Meldungen des DECT-Protokolls (PRT2) aufweist,
**dadurch gekennzeichnet, daß** die zentrale Einrichtung (SLM) in Form eines peripheren Anschlußmoduls in die Vermittlungseinrichtung (SWU) eingebunden ist, und daß von der zentralen Einrichtung auszuwertende Meldungen über die Basisstationen (BS) in Meldungen eines Protokolls für drahtgebundene Übertragung eingepackt an die zentrale Einrichtung (SLM) weitergeleitet werden.

## Claims

1. Cordless communications system according to the ETSI standard DECT, consisting of
- a switching device (SWU) with switching control (SC) for setting up and disconnecting connections to terminals (PP),
- a multitude of radio base stations (BS) for provision of the air interface (RI) according to the ETSI-standard DECT, where the base stations (BS) each have one protocol evaluation device (AE2) for evaluation of a part (L2-L PRT2) of the Layer 2 messages of the DECT protocol (PRT2) comprising the function of channel changing in a set-up connection,
- at least one cordless terminal (PP) according to the ETSI standard DECT in order to set up and disconnect a connection to the switching device (SWU) via the air interface (RI) and a base station (BS), and
- a central device (SLM), via which the base stations can be connected to the switching device (SWU), where the central device (SLM) has a protocol evaluation device (AE1) for evaluation of a part (L2-H PRT 2) of the Layer 2 messages of the DECT protocol (PRT2) comprising the function of switching existing connections from one base station (BS) to another base station (BS),
**characterized in that** the central device (SLM) is incorporated into the switching device (SWU) in the form of a peripheral connection module and that messages for evaluation from the central device are forwarded to the central device (SLM) via the base stations (BS) packed in messages of a protocol for wired transmission.

## Revendications

1. Système de communication sans fil selon la norme DECT d'ETSI, comprenant
- un dispositif de commutation (SWU) avec commande de commutation (SC) pour établir et déconnecter des communications avec des terminaux (PP),
- une pluralité de stations radio de base (BS) pour mettre l'interface radio (RI) à disposition selon la norme DECT d'ETSI, les stations de base (BS) présentant chacune un dispositif d'évaluation de protocole (AE2) pour évaluer une partie (L2-L PRT2) des messages de la couche 2 du protocole DECT (PRT2), comprenant la fonction du changement de canal lors d'une communication établie,
- au moins un terminal sans fil (PP) selon la norme DECT d'ETSI afin d'établir et de déconnecter une communication vers le dispositif de commutation (SWU) par l'intermédiaire de l'interface radio (RI) et d'une station de base (BS), et
- un dispositif central (SLM), par l'intermédiaire duquel les stations de base sont connectables au dispositif de commutation (SWU), le dispositif central (SLM) présentant un dispositif d'évaluation de protocole (AE1) pour évaluer une partie (L2-H PRT2) des messages de la couche 2 du protocole DECT (PRT2), comportant la fonction de commutation de communications existantes d'une station de base (BS) vers une autre station de base (BS),
**caractérisé en ce que** le dispositif central (SLM) est intégré au dispositif de commutation (SWU) sous forme d'un module de connexion périphérique, et **en ce que** les messages à évaluer par le dispositif central, enveloppés en messages d'un protocole pour la transmission par fil, sont transmis au dispositif central (SLM) par l'intermédiaire des stations de base (BS).
